# EUROPÄISCHE PATENTSCHRIFT

(11) **EP 3 320 204 B1**
(45) Veröffentlichungstag und Bekanntmachung des Hinweises auf die Patenterteilung: **02.09.2020**
(21) Anmeldenummer: 16734560.2
(22) Anmeldetag: 02.07.2016
(51) Int. Cl.: F02N 11/08, B60R 16/03

(54) **INTEGRATION VON STARTERSTROMSTEUERUNG UND BORDNETZTRENNSCHALTER**
INTEGRATION OF STARTER CURRENT CONTROL AND ON-BOARD ELECTRICAL SYSTEM DISCONNECTOR SWITCH
INTÉGRATION D'UNE COMMANDE DE COURANT DE DÉMARRAGE ET D'UN SECTIONNEUR DE RÉSEAU DE BORD

(30) Priorität: 09.07.2015 DE 102015008881
(43) Veröffentlichungstag der Anmeldung: 16.05.2018
(73) Patentinhaber: Daimler AG, 70372 Stuttgart (DE)
(72) Erfinder: ZINSER, Klaus, 71116 Gaertringen (DE); BAXENDALE, Mark, 71093 Weil im Schönbuch (DE); GROHMANN, Dieter, 75391 Gechingen (DE); WÖRZ, Markus, 71229 Leonberg (DE); SEITZ, Christian, 71083 Herrenberg (DE)
(74) Vertreter: JENSEN & SON
(86) Internationale Anmeldenummer: PCT/EP2016/001135
(87) Internationale Veröffentlichungsnummer: WO 2017/005355

(56) Entgegenhaltungen:
- EP-A1- 2 469 070
- WO-A1-2012/076123
- WO-A2-03/105330
- DE-A1-102008 054 706
- DE-A1-102010 042 802
- DE-A1-102011 101 531
- DE-A1-102012 219 560

## Beschreibung

Die Erfindung betrifft ein integriertes Starter- und Bordnetztrennmodul angeschlossen an eine Starterbatterie und an ein Bordnetz mit einem Wandler und ein Verfahren zur Startstrombegrenzung in einem Kraftfahrzeug. Ferner betrifft die Erfindung die Verwendung des integrierten Starter- und Bordnetztrennmoduls in Mehrspannungsbordnetzen, insbesondere bei Start-Stopp-Betrieb von Plug-in-Hybridfahrzeugen und für Hybridbordnetze.

In Hybridfahrzeugen wird ein Zustarten des Verbrennermotors während der elektrischen Fahrt häufig über den bekannten 12 Volt-Startermotor bewerkstelligt. Die elektrische Maschine kann zu vollem Umfang ihr Drehmoment als elektrischen Antrieb einsetzen und das zusätzliche Moment wird zum Andrehen des Verbrenners aus einer zweiten Energiequelle bereitgestellt. Ein Problem ist dabei, dass die 12 Volt-Bordnetzversorgung durch den Startvorgang gestört wird und ein Spannungseinbruch erfolgt. Der Starterkreis muss vom Bordnetz getrennt werden und das Bordnetz über eine zusätzliche Energiequelle versorgt werden, in der Regel über einen Wandler, der eine Energieversorgung aus der Antriebsbatterie bereitstellt. Falls diese Energiequelle plötzlich ausfällt, muss eine redundante Versorgung das Bordnetz sicherstellen, um Sicherheitsfunktionen wie Licht, Lenkung, usw. zu gewährleisten. Üblicherweise erfolgt dies durch eine Hilfsbatterie, wobei die Verschaltung von Hilfsbatterie, Wandler und Starterbatterie sehr komplex und aufwändig ist.

Aus dem Stand der Technik sind mehrere Einzelmodule zur getrennten Ausführung der Funktionen bekannt, wobei zusätzliche Hilfsbatterien oder eine redundante Versorgung durch DC-DC-Wandler erforderlich sind. Bei Ausfall der Bordnetzversorgung oder des Wandlers während des Verbrennerstarts muss der Start abgebrochen werden und das Fahrzeug mit dem Elektroantrieb zu einem Nothalt gebracht werden.

Aus der WO 2014/064148 A1 bzw. der DE 10 2012 219 560 A1 aus der selben Patentfamilie ist ein Fahrzeug mit einem Verbrennungsmotor und mit einem Bordnetz bekannt, wobei das Fahrzeug eine Batterie, einen Stromverteiler, einen Starter, einen Generator und elektrische Verbraucher umfasst. Hierin wird eine Startstrombegrenzung für Start-Stopp-Betrieb beschrieben.

Zum weiteren Stand der Technik kann außerdem auf die EP 2 469 070 A1 verwiesen werden. In dieser Druckschrift wird ein Kraftfahrzeug-Bordnetz und ein Startverfahren für ein Kraftfahrzeug beschrieben, bei dem ein übermäßiger Spannungseinbruch der Batterie beim Startvorgang dadurch verhindert wird, dass die Stromaufnahme des Anlassers mit einem überbrückbaren Vorwiderstand zeitlich beschränkt begrenzt wird. Die Zeitbeschränkung hängt von in Echtzeit bestimmten und ausgewerteten Parametern ab. Üblicherweise resultiert die hohe Stromaufnahme des Starters in Maßnahmen zur Spannungsstützung im Bordnetz, die den Einbruch der Spannung im Bordnetz kompensieren. In dieser Druckschrift erfolgt die Integration eines Vorwiderstandes zur Begrenzung des Starterstroms. Allerdings betrachten die bekannten Strombegrenzungen immer nur Teilnetze oder Einspannungsbordnetze.

Die WO 03/105330 A2 der Anmelderin zeigt eine Anordnung zur Spannungsversorgung mehrerer Verbraucher eines Fahrzeugs mit einem mindestens zwei Energiespeicher umfassenden Bordnetz. Der erste Energiespeicher ist in einem Starterteilkreis mit einem Starter zum Anlassen eines Motors verbunden. Der zweite Energiespeicher ist in einem Verbraucherteilkreis mit dem Verbraucher verbunden. Der Starterteilkreis ist über ein Koppelelement mit dem Verbraucherteilkreis verbunden. Eine Anzahl von als sicherheitsrelevant eingestuften Verbrauchern ist über ein zusätzliches Koppelelement bei Bedarf mit dem Starterteilkreis verbindbar. Ähnliche Aufbauten mit zwei getrennten Energiespeichern für einen Starterteilkreis und einem Verbraucherteilkreis sind außerdem in der WO 2012/076123 A1 sowie der DE10 2008 054 706 A1 beschrieben.

Zum nächstliegenden Stand der Technik kann auf die DE 10 2011 101 531 A1 hingewiesen werden, welche ein Bordnetz mit Starterkreis und Bordnetzkreis zeigt. Dabei ist ein Batterietrennschalter vorhanden, welcher die Starterbatterie vor Überspannungen aus dem Bordnetz schützt. In beiden Fällen ist der Starterkreis über eine Diode permanent mit dem Bordnetzkreis verbunden. Dies führt dazu, dass ein vom Starter verursachter Spannungseinbruch sich auf das Bordnetz auswirkt, was insbesondere bei Start/Stopp-Anwendungen ein gravierender Nachteil ist.

Zum weiteren allgemeinen Stand der Technik kann ferner auf die DE 10 2010 042 802 A1 hingewiesen werden.

Die Aufgabe der hier vorliegenden Erfindung besteht darin, eine Möglichkeit für Startstrombegrenzungen in Mehrspannungsbordnetzen bereitzustellen, wobei das Potenzial von Mehrspannungsbordnetzen mit einer verbesserten Startstrombegrenzung zugänglich gemacht werden soll, um auch aus Batterien mit unterschiedlichen Spannungslagen und unterschiedlichen Lastverhalten zu starten.

Diese Aufgabe wird durch den Gegenstand der unabhängigen Patentansprüche gelöst. Vorteilhafte Ausgestaltungen und Weiterbildungen ergeben sich insbesondere aus den hiervon abhängigen Unteransprüchen.

Gemäß einem ersten Aspekt der Erfindung wird diese Aufgabe durch ein integriertes Starter- und Bordnetztrennmodul zum Anschluss an eine Starterbatterie und an ein Bordnetz mit einem Wandler gelöst, wobei der Wandler von einer Bordnetzseite über eine Startersteuerung und über eine Bordnetztrennung an einen Starterkreis umfassend die Starterbatterie anschließbar ist. Erfindungsgemäß ist das Bordnetz von dem Starterkreis entkoppelbar und die Startersteuerung und die Bordnetztrennung sind in dem Modul integriert.

Es ist eine Idee der Erfindung, einen Start aus unterschiedlichen Teilbordnetzen zu ermöglichen. Durch eine entsprechende Auswahl des geeigneten Potentialzweiges kann der Starterkreis optimal entsprechend des Lastverhaltens der aufgeschalteten Energiequelle mit Strom versorgt werden. Vorteilhafterweise kann ein Überstromschutz für den Starterkreis realisiert werden, wenn aus einer Energiequelle mit sehr geringem Innenwiderstand, wie beispielsweise aus einer Lithium-Hochvoltbatterie, gestartet wird.

Dabei umfasst die Startersteuerung einen Starterschalter zum Einschalten eines Startermotors, wobei der Startermotor mit der Starterbatterie elektrisch gekoppelt ist, so dass der Startermotor und die Starterbatterie während eines Startvorgangs vom Bordnetz trennbar sind. Demnach können Bordnetz und Starterkreis je nach Bedarf entkoppelt oder gekoppelt werden. Die Bordnetztrennung umfasst vorzugsweise einen Bordnetztrennschalter, wobei der Starterschalter und/oder der Bordnetztrennschalter als MOSFET mit intrinsischer Diode ausgestaltet ist/sind. Vorzugsweise sind Starterschalter und Bordnetztrennschalter parallel zueinander geschaltet.

Gemäß der Erfindung ist eine erste Quasi-Diode vorgesehen, die in ihrem Grundzustand geschlossen ist, wobei bei einem Startvorgang die erste Quasi-Diode geöffnet ist und eine Spannungsüberwachung zum Bordnetz erfolgt. Demnach ist die erste Quasi-Diode in dem Modul integrierbar. Außerdem lässt sich so vorteilhafterweise das Bordnetz überwachen und jederzeit eine Maßnahme je nach Bedarf einleiten. Vorzugsweise ist eine Steuerungseinheit vorgesehen, die mit der ersten Quasi-Diode verbunden ist, wobei die Steuerungseinheit bei Unterstreiten eines vorbestimmten Spannungsabfalls an der Bordnetzseite oder bei Ausfall des Wandlers die erste Quasi-Diode durchschaltet und den Startvorgang abbricht. Vorteilhafterweise kann so die Steuerungseinheit auf Spannungsabfälle oder auf Wandler-Ausfälle reagieren. Vorzugsweise ist ein Vorwiderstand vorgesehen, der in Serie zu dem Starterschalter geschaltet ist, wobei der Vorwiderstand von einer Starterkreisseite mit der ersten Quasi-Diode elektrisch verbindbar ist.

Eine zweite Quasi-Diode ist vorzugsweise vorgesehen, die in Serie zu der ersten Quasi-Diode geschaltet ist. Demnach sind also zwei Quasi-Dioden in Serie geschaltet, wobei vorzugsweise ein Spannungsstützpunkt zwischen den beiden Quasi-Dioden bereitgestellt ist. Vorzugsweise ist auch die zweite Quasi-Diode von der Steuerungseinheit steuerbar. Beide Quasi-Dioden sind vorteilhafterweise in dem Modul mit der Startstrombegrenzung integrierbar. Vorzugsweise ist ein Spannungsstützpunkt zwischen der ersten Quasi-Diode und der zweiten Quasi-Diode vorgesehen und/oder eine Vielzahl an schaltbaren Potentialabgriffen im Starterkreis vorgesehen. Vorzugsweise weisen die Potentialabgriffe unterschiedliche Widerstände auf. Die Startersteuerung und die Bordnetztrennung werden vorzugsweise von einer gemeinsamen Energiequelle versorgt, die eine Energieversorgung aus der Starterbatterie bereitstellt. Vorzugsweise ist die gemeinsame Energiequelle der Wandler. Der Wandler ist vorzugsweise als DC-DC-Wandler ausgestaltet und versorgt während des Startvorgangs das Bordnetz. Vorzugsweise ist weiter ein elektronisches Relais in dem Modul integrierbar.

Gemäß einem zweiten Aspekt der Erfindung wird die Aufgabe durch die Verwendung eines integrierten Starter- und Bordnetztrennmoduls nach dem ersten Aspekt der Erfindung in Mehrspannungsbordnetzen gelöst, insbesondere bei Start-Stopp-Betrieb von Plug-in-Hybridfahrzeugen und für Hybridbordnetze.

Es ist eine Idee der Erfindung, die Startersteuerung und die Bordnetztrennung in einem Modul zu integrieren. Außerdem ermöglicht eine geschickte Steuerung, dass mit nur einer 12 Volt-Batterie sowohl Starter- als auch Bordnetznotversorgung gewährleistet sind.

Vorteilhafterweise wird eine einfache Integration durch Anbringung am Batteriepol und die Einsparung einer zusätzlichen Hilfsbatterie bzw. zusätzlicher Stützwandler ermöglicht. Die Integration von Starteransteuerung und Bordnetztrennschalter ermöglicht eine sehr schnelle Schaltreihenfolge zwischen Auftrennen der Verbindung zwischen Batterie und Bordnetz und Starten, d.h. eine schnelle Schaltreihenfolge zwischen Startabbruch und Zuschalten wird gewährleistet. Der Bordnetztrennschalter wird vorzugsweise zum stromrichtungsabhängigen Auftrennen der Verbindung zwischen Batterie und Bordnetz verwendet. Vorteilhafterweise ist eine Spitzenstrombegrenzung beim Startvorgang und eine Startspannungseinbruchsbegrenzung möglich. Außerdem ist eine direkte Montage des Moduls am Batteriepol möglich. Weitere Vorteile sind Crashsicherheit, da eine potentialfreie Zuleitung zum Starterkreis außerhalb des unmittelbaren Startvorgangs ermöglicht wird, und ein automatischer Startabbruch bei Bordnetzversorgungsproblemen während des Startvorgangs. Die Quasi-Diode trennt den Startkreis und den Wandler und versorgt trotzdem das Bordnetz bei Spannungsabfall auf der Bordnetzseite aus der Starterbatterie. Durch eine direkte Anbringung an der Batterie wird eine einfache Integration ermöglicht und es ergibt sich auch ein Gewicht- und Kostenvorteil. Ein Kostenvorteil ergibt sich auch aus der Einsparung einer ansonsten notwendigen Hilfsbatterie mit der entsprechenden Verkabelung. Außerdem ergibt sich eine Kosteneinsparung dadurch, dass eine Montage in einem Arbeitsgang ermöglicht wird.

Nachfolgend wird die Erfindung anhand mehrerer bevorzugter Ausführungsbeispiele unter Bezugnahme auf die Zeichnungen weiter im Detail erläutert.

Dabei zeigen:
- Fig. 1: ein integriertes Starter- und Bordnetztrennmodul gemäß einem ersten Ausführungsbeispiel der Erfindung;
- Fig. 2: ein integriertes Starter- und Bordnetztrennmodul gemäß einem zweiten Ausführungsbeispiel der Erfindung;
- Fig. 3: eine schematische Darstellung der Begrenzung des Startspannungseinbruchs mit Vorwiderstand gemäß einem dritten Ausführungsbeispiel der Erfindung;
- Fig. 4: eine Bordnetztrennung und einen Startabbruch sowie eine Bordnetzstützung bei Wandler-Ausfall gemäß einem vierten Ausführungsbeispiel der Erfindung; und
- Fig. 5: einen Starterschutz bei niederohmiger Batterie gemäß einem fünften Ausführungsbeispiel der Erfindung.

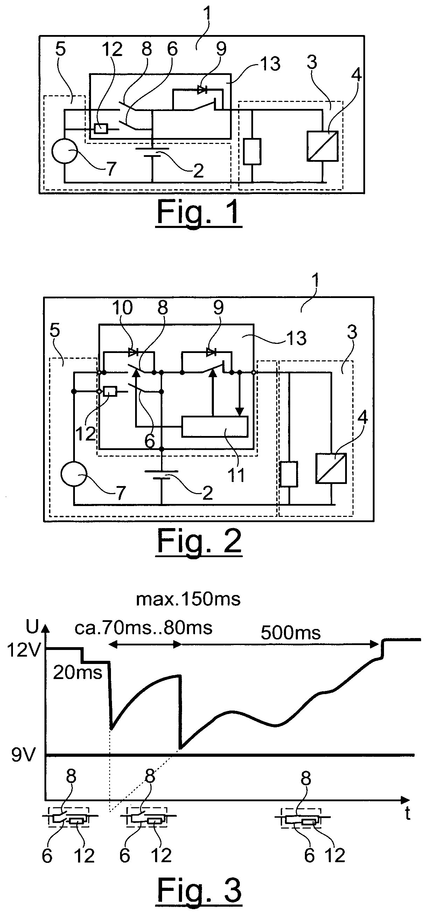

Wie in Fig. 1 zu erkennen ist, ist ein integriertes Starter- und Bordnetztrennmodul 13 mit einer angeschlossenen Starterbatterie 2 gemäß einem ersten Ausführungsbeispiel dargestellt. Das Modul 13 ist auf der Bordnetzseite mit einem Wandler 4, der sich im Bordnetz 3 befindet, angeschlossen. Der Wandler 4 ist von der Bordnetzseite aus über das Modul 13 an einen Starterkreis 5 mit der Starterbatterie 2 anschließbar. Der Anschluss erfolgt über eine Startersteuerung und über eine Bordnetztrennung in dem Modul 13. Das Bordnetz 3 ist von dem Starterkreis 5 entkoppelbar und die Startersteuerung und die Bordnetztrennung sind gemeinsam in dem Modul 13 integriert. Hybridfahrzeuge erfordern einen 12 Volt-Zustart bei hohen Fahrgeschwindigkeiten. Der Spannungsbedarf der Lenk- und Fahrwerksysteme erfordert eine Entkopplung zwischen dem Starterkreis 5 und dem Bordnetz 3.

Bei Stillstand des Fahrzeuges und Fahrbetrieb ohne Startvorgang ist keine Entkopplung notwendig. Eine in dem Modul 13 vorgesehene Quasi-Diode 9 ist in ihrem Grundzustand geschlossen. Sobald das Fahrzeug bei einem Startvorgang Fahrt aufnimmt erfolgt eine Entkopplung zwischen dem Starterkreis 5 und dem Bordnetz 3. Dadurch wird der Quasi-Dioden-Schalter 9 geöffnet. Eine Spannungsüberwachung zum Bordnetz 3 wird aktiv. Der Startermotor 7 ist im Starterkreis 5 vorgesehen und über einen Vorwiderstand 12 kann der Starterkreis 5 mit der Quasi-Diode 9 in Serie geschaltet werden. Dabei ist in dem Starterkreis 5 selbst ein Starterschalter 6 vorgesehen, der in Serie zu dem Vorwiderstand 12 und parallel zu einem Bordnetztrennschalter 8 geschaltet ist.

Bei einem Spannungseinbruch auf eine Spannung kleiner als 11 Volt auf der Bordnetzseite oder bei einem Wandler-Ausfall erfolgt ein Startabbruch. Die Erholzeit der Batterie 2, um zurück auf die Nennvoltspannung von 12 Volt zu kommen, beträgt 20 ms bei einer Schaltzeit von weniger als 1 µs in diesem ersten Ausführungsbeispiel. Die maximale Zeit unterhalb einer Spannung von 11 Volt ist kleiner als 20 ms. Diese Zeit kann in den Fahrwerksystemen gestützt werden.

Fig. 2 zeigt das Modul 13 gemäß einem zweiten Ausführungsbeispiel der Erfindung. Fig. 2 unterscheidet sich von Fig. 1 dadurch, dass weiter eine Steuerungseinheit 11 vorgesehen ist, die die erste Quasi-Diode 9 und eine zweite Quasi-Diode 10 steuert, wobei die beiden Quasi-Dioden 9, 10 in Serie geschaltet sind. Die Steuerungseinheit 9 schaltet bei Unterschreiten eines Bordnetz-Spannungslimits die Quasi-Diode 9 durch und bricht den Start ab. Durch eine entsprechende Softwaresteuerung erfolgt eine Diagnose und eine Statusmeldung in diesem zweiten Ausführungsbeispiel. Außerdem wird der Stromverbrauch der beiden Quasi-Dioden 9, 10 durch eine entsprechende Ansteuerung minimiert, wobei der Starterschalter 6 und der Bordnetztrennschalter 8 als MOSFETs mit intrinsischen Dioden ausgestaltet sind. Das gesamte System 1 der Fig. 2 unterscheidet sich daher von dem aus der Fig. 1 insbesondere in dem Modul 13.

Fig. 3 illustriert eine Begrenzung des Spannungseinbruchs mit Vorwiderstand gemäß einem dritten Ausführungsbeispiel der Erfindung. Dabei ist die Spannung am Bordnetz 3 über der Zeitachse aufgetragen. Wenn beide Schalter 6, 8 offen sind, ist der Vorwiderstand 12 im Leerlauf und die Starterleitung potentialfrei. Sobald die Spannung unterhalb von 11 Volt abfällt in einer Zeit von 20 ms wird der Starterschalter 6 geschlossen, so dass der Vorwiderstand 12 in Serie zur Quasi-Diode 9 geschaltet ist. Der Vorwiderstand 12 beträgt 8.5 mΩ und wird eingeschaltet bis die Bordnetzspannung sicher über 9 V bleibt. Innerhalb einer Zeit von zwischen 70 ms und 80 ms, wobei in diesem dritten Ausführungsbeispiel die maximale Zeit 150 ms beträgt, steigt die Spannung wieder nahezu exponentiell an, bevor auch der Bordnetztrennschalter 8 geschlossen wird und damit der Vorwiderstand 12 überbrückt und der gesamte Strom fließt. Dann erfolgt ein weiterer Spannungsabfall auf nahezu 9 Volt, wobei danach die Spannung wieder kontinuierlich ansteigt bis wieder die Nennvoltspannung erreicht ist und die Starterleitung potentialfrei wird. Die Startdauer beträgt 500 ms in diesem dritten Ausführungsbeispiel.

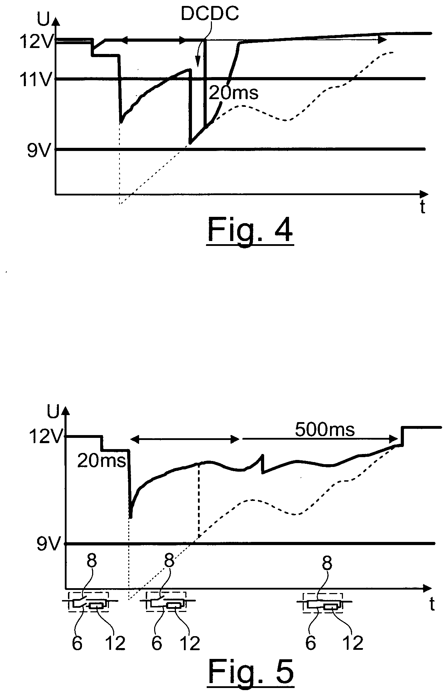

Fig. 4 illustriert die Bordnetztrennung, einen schnellen Startabbruch und eine Bordnetzstützung bei Wandler-Ausfall gemäß einem vierten bevorzugten Ausführungsbeispiel. Dort wo in Fig. 4 ein Pfeil mit der Markierung DCDC eingetragen ist erfolgt der Wandler-Ausfall. Davor versorgt der Wandler das Bordnetz 3 und die Quasi-Diode 9 ist geschlossen und trennt den Starterkreis 5 vom Bordnetz 3. Danach wird die Quasi-Diode 9 geschaltet und die Starterbatterie 2 versorgt das Bordnetz 3. Außerdem ist gestrichelt die Diodenfunktion des Bordnetztrennschalters 8 in diesem Diagramm aufgetragen, wobei der Spannungsabfall über der Zeit aufgetragen ist. Im letzten Abschnitt erholt sich die Batteriespannung auf eine resultierende Lastspannung innerhalb von 15 ms.

Fig. 5 illustriert den Starterschutz bei niederohmiger Batterie gemäß einem fünften Ausführungsbeispiel der Erfindung. Fig. 5 unterscheidet sich bezüglich der drei Zeitabschnitte keineswegs von der Fig. 3, aber in diesem fünften Ausführungsbeispiel wird eine Lithiumstarterbatterie eingesetzt und am Ende des ersten Zeitabschnitts wird diese niederohmige Batterie erkannt. Dadurch bleibt der Widerstand geschaltet bis der Widerstand zu heiß wird. Außerdem unterscheidet sich der Verlauf zwischen dem zweiten und dem dritten Zeitabschnitt, so dass in Fig. 5 kein abrupter Spannungsabfall am Ende des zweiten Zeitabschnitts zu erkennen ist. Während des zweiten Zeitabschnitts schaltet der Strom durch und eine Notzuschaltung bei Überschreitung des Temperaturlimits des Widerstandes kann erfolgen.

## Patentansprüche

1. Integriertes Starter- und Bordnetztrennmodul (13) angeschlossen an eine Starterbatterie (2) und an ein Bordnetz (3) mit einem Wandler (4),
wobei der Wandler (4) von einer Bordnetzseite über eine Startersteuerung und über eine Bordnetztrennung an einen Starterkreis (5) umfassend die Starterbatterie (2) anschließbar ist, wobei
das Bordnetz (3) von dem Starterkreis (5) entkoppelbar ist und die Startersteuerung und die Bordnetztrennung in dem Modul (13) integriert sind, wobei
die Startersteuerung einen Starterschalter (6) zum Einschalten eines Startermotors (7) umfasst, wobei der Startermotor (7) mit der Starterbatterie (2) elektrisch gekoppelt ist, so dass der Startermotor (7) und die Starterbatterie (2) während eines Startvorgangs vom Bordnetz (3) trennbar sind, wobei die Bordnetztrennung einen Bordnetztrennschalter (8) umfasst, und wobei der Starterschalter (6) und/oder der Bordnetztrennschalter (8) als MOSFET mit intrinsischer Diode ausgestaltet ist/sind,
**dadurch gekennzeichnet, dass**
eine erste Quasi-Diode (9) vorgesehen ist, die in ihrem Grundzustand geschlossen ist, wobei bei einem Startvorgang die erste Quasi-Diode (9) geöffnet ist und eine Spannungsüberwachung zum Bordnetz (3) erfolgt, wobei eine Steuerungseinheit (11) vorgesehen ist, die mit der ersten Quasi-Diode (9) verbunden ist, wobei die Steuerungseinheit (11) bei Unterschreiten eines vorbestimmten Spannungsabfalls an der Bordnetzseite oder bei Ausfall des Wandlers (4) die erste Quasi-Diode (9) durchschaltet und den Startvorgang abbricht, wobei
ein Vorwiderstand (12) vorgesehen ist, der in Serie zu dem Starterschalter (6) geschaltet ist, und wobei der Vorwiderstand (12) von einer Starterkreisseite mit der ersten Quasi-Diode (9) elektrisch verbindbar ist.

2. Modul nach Anspruch 1,
**dadurch gekennzeichnet, dass**
eine zweite Quasi-Diode (10) vorgesehen ist, die in Serie zu der ersten Quasi-Diode (9) geschaltet ist.

3. Verwendung eines integrierten Starter- und Bordnetztrennmoduls (13) nach Anspruch 1 oder 2 in Mehrspannungsbordnetzen.

4. Verwendung nach Anspruch 3, beim Start-Stopp-Betrieb von Plug-in-Hybridfahrzeugen und für Hybridbordnetze.

## Claims

1. Integrated starter and on-board electrical system disconnection module (13) connected to a starter battery (2) and to an on-board electrical system (3) with a converter (4), wherein the converter (4) is connectable from one on-board electrical system side to a starter circuit (5) including the starter battery (2) via a starter control unit and an on-board electrical system disconnect, wherein
the on-board electrical system (3) can be decoupled from the starter circuit (5) and the starter control unit and the on-board electrical system disconnect are integrated in the module (13), wherein
the starter control unit comprises a starter switch (6) for switching on a starter motor (7), wherein the starter motor (7) is electrically coupled to the starter battery (2), so that the starter motor (7) and the starter battery (2) can be disconnected from the on-board electrical system (3) during a starting operation, wherein
the on-board electrical system disconnect comprises an on-board electrical system circuit breaker (8), and wherein the starter switch (6) and/or the on-board electrical system circuit breaker (8) is/are designed as MOSFET with intrinsic diode,
**characterised in that**
a first quasi-diode (9), which is closed in its basic state, is provided, wherein the first quasi-diode (9) is open during a starting operation and voltage to the on-board electrical system (3) is monitored, wherein a control unit (11) connected to the first quasi-diode (9) is provided, wherein the control unit (11) switches through the first quasi-diode (9) and aborts the starting operation if a predetermined voltage drop is undershot on the on-board electrical system side or the converter (4) fails, wherein
a dropping resistor (12) connected in series with the starter switch (6) is provided and wherein the dropping resistor (12) is electrically connectable to the first quasi-diode (9) from one starter circuit side.

2. Module according to claim 1,
**characterised in that**
a second quasi-diode (10) connected in series with the first quasi-diode (9) is provided.

3. Application of an integrated starter and on-board electrical system disconnection module (13) according to claim 1 or 2 in multiple-voltage on-board electrical systems.

4. Application according to claim 3 in the start-stop operation of plug-in hybrid vehicles and for hybrid on-board electrical systems.

## Revendications

1. Module de sectionneur de réseau de bord et de démarreur intégré (13) raccordé à une batterie de démarreur (2) et à un réseau de bord (3) comprenant un convertisseur (4), le convertisseur (4) pouvant être raccordé à un côté de réseau de bord par une commande de démarreur et par un sectionneur de réseau de bord à un circuit de démarreur (5) comprenant la batterie de démarreur (2), le réseau de bord (3) pouvant être découplé du circuit de démarreur (5) et la commande de démarreur et le sectionneur de réseau de bord étant intégrés dans le module (13),
la commande de démarreur comprenant un interrupteur de démarreur (6) pour mettre en marche un moteur de démarreur (7), le moteur de démarreur (7) étant couplé électriquement à la batterie de démarreur (2), de sorte que le moteur de démarreur (7) et la batterie de démarreur (2) puissent être séparés pendant le processus de démarrage du réseau de bord (3), le sectionneur de réseau de bord comprenant un interrupteur de sectionneur de réseau de bord (8) et l'interrupteur de démarreur (6) et/ou l'interrupteur de sectionneur de réseau de bord (8) étant conçu(s) comme MOSFET avec une diode intrinsèque, **caractérisé en ce qu'**une première quasi-diode (9) étant fermée dans son état de base lors d'un processus de démarrage la première quasi-diode (9) étant ouverte et une surveillance de tension étant effectuée au niveau du réseau de bord (3), une unité de commande (11) étant reliée à la première quasi-diode (9), l'unité de commande (11) lors d'une chute de la tension en dessous d'une valeur prédéfinie du côté du réseau de bord ou lors d'une panne du convertisseur (4), connectant la première quasi-diode (9) et interrompant le processus de démarrage,
une résistance de série (12) étant raccordée en série à l'interrupteur de démarreur (6) et la résistance de série (12) pouvant être connectée électriquement d'un côté du circuit de démarreur à la première quasi-diode (9).

2. Module selon la revendication 1, **caractérisé en ce qu'**une seconde quasi-diode (10) est connectée en série à la première quasi-diode (9).

3. Utilisation d'un module de sectionneur de réseau de bord et de démarreur intégré (13) selon la revendication 1 ou la revendication 2 sans des réseaux de bord multi-tension.

4. Utilisation selon la revendication 3, lors d'un fonctionnement start and stop dans des véhicules hybrides rechargeables et pour des réseaux de bord hybrides.
